# EUROPÄISCHE PATENTSCHRIFT

(11) **EP 1 693 781 B1**
(45) Veröffentlichungstag und Bekanntmachung des Hinweises auf die Patenterteilung: **03.11.2010**
(21) Anmeldenummer: 05018132.0
(22) Anmeldetag: 22.08.2005
(51) Int. Cl.: G06K 9/00, G06K 9/20

(54) **Verfahren und Anordnung zur optischen Aufnahme biometrischer Fingerdaten**
Process and arrangement for optical recording of biometric fingerdata
Procédé et disposition pour l'enregistrement optique de données digitales biométriques

(30) Priorität: 24.08.2004 DE 102004041115
(43) Veröffentlichungstag der Anmeldung: 23.08.2006
(73) Patentinhaber: TBS Holding AG, 8808 Pfäffikon (CH)
(72) Erfinder: Hauke, Rudolf, 89168 Niederstotzingen (DE); Parziale, Guiseppe, 74023 Grottaglie (TA) (IT); Paar, Gerhard, 8045 Graz (AT)
(74) Vertreter: Liedtke, Klaus

(56) Entgegenhaltungen:
- DE-A1- 3 424 955
- DE-A1- 10 123 561
- DE-A1- 10 153 808
- DAVID ZHANG ET AL: "Integrated Image and Graphics Technologies" Februar 2004 (2004-02), KLUWER , NORWELL, MA, USA , XP002390949 * Seite 142, Absatz 2-4 * & OLIVEIRA M M ET AL: "RELIEF TEXTURE MAPPING" COMPUTER GRAPHICS. SIGGRAPH 2000 CONFERENCE PROCEEDINGS. NEW ORLEANS, LA, JULY 23 - 28, 2000, COMPUTER GRAPHICS PROCEEDINGS. SIGGRAPH, NEW YORK, NY : ACM, US, 23. Juli 2000 (2000-07-23), Seiten 359-368, XP001003575 ISBN: 1-58113-208-5
- RIOUX M: "COLOR 3-D ELECTRONIC IMAGING OF THE SURFACE OF THE HUMAN BODY" PROCEEDINGS OF THE SPIE, SPIE, BELLINGHAM, VA, US, Bd. 2277, 28. Juli 1994 (1994-07-28), Seiten 42-54, XP000563365 ISSN: 0277-786X

## Beschreibung

Die Erfindung betrifft ein Verfahren und eine Anordnung zum Erfassen biometrischer Daten eines Fingers.

International wird zunehmend der Einsatz so genannter biometrischer Merkmale im Reisepass gefordert, wie beispielsweise im US-Visit und europäischen Programmen.

Ziel dieser Programme ist, die Sicherheit beispielsweise für Flugreisende zu erhöhen und Terroristen möglichst früh erkennen zu können.

Zur Erfassung der biometrischen Daten werden vorzugsweise Merkmale aus dem Gesicht, der Iris sowie des Fingers verwendet. Aufgrund der hohen Erkennungsrate und der Unveränderlichkeit der Merkmale im Alterungsverlauf und der Unterscheidungsschärfe auch bei eineiigen Zwillingen sind die Merkmale des Fingers besonders geeignet.

Speziell zur Überwachung von Personen bei einem Grenzübertritt, müssen die biometrischen Merkmale einer Zutritt verlangenden Person mit bestehenden, sehr großen Datenbanken, die vielen Millionen Einträge enthalten können, abgeglichen werden. Dabei ist sicherzustellen, dass die auf dem Reisepass fälschungssicher hinterlegten biometrischen Daten mit der einreisenden Person übereinstimmen. Da diese Merkmale in einer so genannten 1:N-Suche aus Millionen von Sätzen von Vergleichsinformationen, insbesondere Fahndungsdatenbanken, identifiziert werden müssen, ergibt sich bei Fingermerkmalen ein Erkennungsproblem der folgenden Art:

Je kleiner die abgetastete Oberfläche des zu identifizierenden Fingers ist, desto ungenauer sind die Ergebnisse der 1:N-Suche, da die Anzahl der Merkmale, so genannte Minutien, zur eindeutigen Erkennung nicht ausreichend ist. Untersuchungen haben ergeben, dass Erkennungsverfahren, die mit Fingersensoren arbeiten, welche nur einen einfachen Abdruck des Fingers liefern, aufgrund der nicht vollständig erfassten Mantelfläche des Fingers nur eine Erkennungsrate von 80% bis 85% erreichen. Derartige Verfahren, sogenannte Flat-Finger-Impressions, werden überwiegend in zivilen Bereichen angewendet. Zum Schutz vor Kriminalität ist eine derart niedrige Erkennungsrate unzureichend.

In der behördlichen Kriminalistik werden deshalb seit jeher abgerollte Fingerabdrücke eingesetzt, bei denen die zu registrierende Person zuvor die Finger einfärben und dann auf Papier abrollen muss, um die gesamte Mantelfläche des Fingers von Nagel zu Nagel darstellen zu können.

Es sind auch neuere Verfahren bekannt, bei denen sogenannte Live-Scanner eingesetzt werden, die das aufwendige Einfärben ersetzen, wobei der Finger über eine Glasplatte abgerollt wird und der dabei entstehende Kontrast durch eine verhinderte Totalreflexion zur optischen Abbildung mittels einer Kamera genutzt wird. Mit diesem Verfahren ist es möglich, die Erkennungsrate bei der 1:N-Identifikation in großen Datenbanken signifikant auf besser als 98% zu erhöhen.

Nachteilig ist bei diesem Verfahren jedoch, dass die zu registrierende Person den Finger auf einer Unterlage abrollen muss. Dies führt in der Regel zu Problemen mit unerfahrenen Benutzern, wobei die Fingerabdrücke verschmieren. Zudem können sich durch den unterschiedlichen Auflagedruck die Finger unterschiedlich deformieren oder schlechte Kontraste ergeben. Des Weiteren ist beobachtet worden, dass neben mangelndem Kontrast, insbesondere bei trockener Haut, auf der Registrierunterlage Fettspuren hinterlassen werden, die bei einer späteren Erkennung miterkannt werden können. Um dies zu vermeiden, müssen in aller Regel die Registrierunterlagen aus Glas nach jeder Benutzung gereinigt werden. Da für eine optimale Genauigkeit eine Aufsichtsperson benötigt wird, können diese Verfahren nicht sinnvoll an automatisierten Überwachungsstationen, wie beispielsweise Kiosken bei den vorgenannten Einreiseprogrammen, verwendet werden.

Es sind Systeme bekannt, die es ermöglichen, einen Finger berührungslos abzubilden.

So ist es beispielsweise aus der EP 1 073 988 B1 beziehungsweise der WO 99/56267 bekannt, einen Finger berührungslos abzubilden, wobei die Kontrastentstehung auf der Ausnutzung der Eigenschaften polarisierten Lichtes beruht. Als nachteilig erweist sich dabei jedoch die ungenügende Lichtausbeute, da die Polarisationsfilter eine effektive Nutzung der Photonen verhindern und damit der Wirkungsgrad niedrig ist. Desweiteren werden abbildungsbedingte Verzeichnungen nicht kompensiert und führen sehr oft zur Erkennung falscher Minutien, was durch Verschattungen der Hautleisten im verwendeten Beleuchtungsstrahlengang bedingt wird.

Basierend auf dem berührungslosen Abbildungsprinzip ist auch eine Reihe von Techniken bekannt geworden, bei denen der abgerollte Finger, also die Mantelfläche, benutzerfreundlich abgebildet werden kann. Hierzu gehören beispielsweise DE 101 23 561 A1, DE 101 53 808 A1 und DE 101 03 622 A1.

In DE 101 23 561 A1 wird ein Verfahren zur Personenidentifikation mittels 3-dimensionaler Fingerkuppenanalyse beschrieben. Es wird jedoch kein Verfahren angegeben, wie das 3-D-Modell errechnet wird und wie die Probleme der Zusammensetzung der Einzelbilder zu einem Gesamtbild mit hinreichender Genauigkeit gelöst werden.

Soll ein solches Verfahren zur Personenidentifikation an Landesgrenzen eingesetzt werden, müssen Mindestkriterien der Abbildungsqualität, beispielsweise FBI Appendix F, oder ähnliche Kriterien eingehalten werden, und es muss sichergestellt sein, dass die aufgenommenen Bilder der Hautleisten kompatibel zu existierenden abgerollten Fingerbildern sind. Es ist unbedingt erforderlich, Personen anhand bestehender Datenbanken wiederzuerkennen, insbesondere wenn diese mit neuen optischen Verfahren erneut erfasst wurden.

In DE 101 03 622 A1 ist ein Verfahren zur Mantelflächenabbildung eines Fingers beschrieben, das im Wesentlichen mittels einer zylindrischen Abbildung die Mantelfläche abbildet. Nachteilig ist jedoch zum einen, dass der Finger prinzipbedingt nicht gleichförmig ausgeleuchtet wird, und zum anderen, dass die Abbildung sehr starke Verzeichnungen aufweist, besonders dann, wenn der Finger nicht exakt in der optischen Achse des Zylinders liegt.

Die DE 101 53 808 A1 beschreibt ein weiteres Verfahren zur berührungslosen optischen Erzeugung von abgerollten Fingerabdrücken, bei denen die auftretenden Bildverzeichnungen dadurch beseitigt werden sollen, dass eine Kette von Teilbildern generiert wird, bei denen die Überlappungsbereiche benachbarter Teilbilder als Orientierungsstruktur unter Ausnutzung des Kapillarlinienmusters korreliert werden. Neben der aufwendigen Realisierung dieser Anordnung ist die geforderte Abbildungsgüte mit einem solchen Verfahren nicht oder nur unter höchstem Aufwand erzielbar.

Aus der US 2004/0008875 A1 ist ein Verfahren zum Erfassen und Verarbeiten von dreidimensionalen Fingerabdrücken bekannt, bei dem ein in Kontakt mit einer transparenten Platte angeordneter Finger mittels mindestens zwei Lasern abgetastet wird, wobei die Laser entlang des Fingers schwenken, und aus überlappenden Abtastzeilen ein stereoskopisches Fingerabdruckbild erzeugt und gespeichert wird. Das Verfahren weist alle Nachteile berührender optischer Fingerabdruckverfahren auf. Zudem kann aufgrund der geometrischen Anordnung des Fingers auf der Platte nicht die gesamte Mantelfläche beziehungsweise der gesamte Fingerballen abgebildet werden. Die Erkennungsrate ist somit niedrig. Ein genaues Abbildungsverfahren ist in der Schrift nicht angegeben.

Die DE 34 24 955 A1 beschreibt eine Anordnung zum Erfassen von Fingerpapillaren. Die Anordnung umfasst eine Lichtquelle, einen Abtaster, der eine erste Ablenkeinheit zur Ablenkung eines von einem Objektiv auf die Fingeroberfläche projizierten Lichtpunktes über die Fingerpapillaren in einer ersten Richtung und eine zweite Ablenkeinheit zur langsameren Ablenkung des Lichtpunktes in einer zweiten Richtung aufweist, und einen Fotodetektor, der das am Finger reflektierte Licht in ein elektrisches Signal umwandelt. Die erste Ablenkeinheit ist auf einem Kreisbogen um den Finger geführt.

Aus David Zhang ET AL: "Integrated Image and Graphics Technologies" Februar 2004 (2004-02) und aus Oliveira M M ET AL: "Relief Texture Mapping" Computer Graphics. Siggraph 2000 Conference Proceedings. New Orleans, LA, July 23 - 28, 2000, Computer Graphics Proceedings. Siggraph, New York, NY : ACM, US, 23. Juli 2000 (2000-07-23) ist eine bildbasierte Modellierung mit Vorentzerrung bekannt.

Aus Rioux M: "Color 3-D Electronic Imaging of the Surface of the Human Body" Proceedings of the Spie, Spie, Bellingham, VA, US, Bd. 2277, 28. Juli 1994 (1994-07-28) sind ein Verfahren und eine Vorrichtung bekannt, welche eine berührungslose und verzerrungsfreie Fingeraufnahme von Nagelbett bis Nagelbett ermöglicht.

Im Stand der Technik sind stereoskopische Verfahren an sich bekannt. Insbesondere ist das Locus-Verfahren bekannt, mit dem aus Stereobildpaaren Höhenabweichungen eines abgebildeten Körpers in Bezug auf ein vorzugebendes geometrisches Modell ermittelt werden können.

Zur Erzeugung von Stereobildpaaren ist es auch bekannt, ein Hierarchical-Feature-Vector-Matching (HFVM) anhand von Berechnungen im Bildraum durchzuführen.

Zur Kalibrierung von stereoskopischen Abbildungsanordnungen ist ein Verfahren bekannt, anhand eines Probekörpers die Verzeichnungen und Verzerrungen einer stereoskopischen Abbildungsanordnung zu ermitteln.

Aufgabe der Erfindung ist es, ein Verfahren und eine Vorrichtung anzugeben, mit denen die Nachteile der bekannten Verfahren zur Aufnahme und Verarbeitung von Fingerabdrücken vermieden werden, die benutzerfreundlich und zuverlässig zumindest einen Fingerballen darstellen können sowie eine erhöhte Fälschungssicherheit ermöglichen.

Erfindungsgemäß wird die Aufgabe gelöst mit einem Verfahren, welches die in Anspruch 1 angegebenen Merkmale aufweist, und einer Anordnung, welche die in Anspruch 18 angegebenen Merkmale aufweist.

Vorteilhafte Ausgestaltungen sind in den jeweiligen abhängigen Ansprüchen angegeben.

Erfindungsgemäß wird zum Erfassen biometrischer Daten eines Fingers eine abzubildende Oberfläche des Fingers berührungslos in gleichzeitig mindestens drei unterschiedliche Richtungen in digitale Bilder abgebildet, wobei jeder Punkt der abzubildenden Oberfläche in zumindest zwei der Richtungen abgebildet wird, wobei die abzubildende Oberfläche von einem ersten Nagelrand zu einem zweiten Nagelrand über einen Ballen des Fingers reicht und wobei das Abbilden mittels mindestens drei Bildempfänger, die auf einem virtuellen Bogen um eine Systemachse angeordnet und auf die Systemachse ausgerichtet sind, durchgeführt wird. Anschließend wird ein gegenüber der Geometrie des Fingers vereinfachtes geometrisches Grundmodell aus ermittelten geometrischen Parametern eines vorgegebenen geometrischen Grundkörpers und aus Silhouetten des Fingers in fehlerkorrigierten Bildern von drei unterschiedlichen Sensoren bestimmt und es werden vorentzerrte Bilder mittels Geometrievorentzerrung der digitalen Bilder anhand des vereinfachten geometrischen Grundmodells ermittelt, wobei die fehlerkorrigierten Bilder auf das Grundmodell aufprojiziert werden und jeder Vergleichspunkt in die betreffenden fehlerkorrigierten Bilder rückprojiziert wird. Zudem wird ein dreidimensionales Modell der abzubildenden Oberfläche mittels einer stereoskopischen Auswertung der vorentzerrten Bilder rekonstruiert und anhand dessen zumindest ein Fingermerkmal ermittelt.

Bei der erfindungsgemäßen Lösung wird jeder Punkt der abzubildenden Fläche in zwei verschiedene Richtungen abgebildet, wobei die abzubildende Oberfläche nicht berührt wird. Dieses Verfahren ermöglicht es, die gesamte für Fingerabdrücke relevante Mantelfläche eines Fingers von Nagelrand zu Nagelrand abzubilden, ohne dass Verschmutzungen durch von der Haut abgelagerte Stoffe die Abbildung beeinträchtigen. Zudem ist durch die Abbildung in zwei verschiedene Richtungen und somit die Bildaufnahme aus zwei verschiedenen Perspektiven eine stereoskopische Auswertung für eine hohe Genauigkeit der Erfassung möglich, wobei die Genauigkeit durch eine Geometrievorentzerrung deutlich verbessert wird. Durch das gleichzeitige Abbilden werden außerdem Fehler, die aus einer Bewegung des Fingers resultieren, minimiert. Als gleichzeitig im Sinne der Erfindung werden solche Verschlusszeiten angesehen, die innerhalb eines gemeinsamen Zeitfensters von 20 ms liegen. Die Erfindung ermöglicht durch die dreidimensionale Abbildung eine erhöhte Fälschungssicherheit, da flache Nachbildungen nicht als Finger identifiziert werden.

Vorzugsweise wird dabei das dreidimensionale Modell basierend auf dem geometrischen Grundmodell rekonstruiert, wobei dem dreidimensionalen Modell eine Hautlinienstruktur und/oder eine Oberflächentextur der abzubildenden Oberfläche zugeordnet werden. Dies ermöglicht eine schnelle Durchführung des Verfahrens.

Die Genauigkeit der Erfassung kann weiter erhöht werden, indem für das Abbilden Kameras verwendet werden, wobei Abbildungsfehler der Kameras in den digitalen Bildern rechnerisch korrigiert werden. Die entstehenden fehlerkorrigierten Bilder können in allen Schritten des Verfahrens anstelle von unkorrigierten digitalen Bildern verwendet werden.

In einer speziellen Ausgestaltung wird jedes digitale Bild in einer Schattierungskorrektur gefiltert, wobei ein lokaler Kontrast erhalten bleibt und die durchschnittlichen Intensitätswerte der digitalen Bilder normiert werden. Mit einem solchen Korrekturschritt können niederfrequente Beleuchtungsinkonsistenzen aus den digitalen Bildern entfernt werden. Die entstehenden gefilterten Bilder können in allen Schritten des Verfahrens anstelle von ungefilterten digitalen Bildern verwendet werden. Ein digitales Bild kann sowohl fehlerkorrigiert als auch gefiltert werden.

Zweckmäßigerweise werden für die stereoskopische Auswertung zweidimensionale Parallaxen aus Paarkombinationen der vorentzerrten Bilder ermittelt. Die Parallaxen aus den vorentzerrten Bildpaaren werden mit einer Rücktransformation in Parallaxen im Bildraum der fehlerkorrigierten Bilder konvertiert.

In einer bevorzugten Ausführungsform wird für das geometrische Grundmodell wenigstens ein Teil eines Rotationskörpers mit entlang seiner Rotationsachse segmentweise variierenden Radien verwendet, wobei die Rotationsachse und die Radien anhand von Umrissen des Fingers in mindestens zwei digitalen Bildern unterschiedlicher Abbildungsrichtungen bestimmt werden. Ein solches Grundmodell kann in kurzer Zeit bestimmt werden und erlaubt eine hohe Genauigkeit der späteren Erfassung von Fingermerkmalen.

Eine besonders hohe Genauigkeit der Erfassung von Fingermerkmalen kann erreicht werden, wenn für das dreidimensionale Modell Höhenabweichungen zwischen dem geometrischen Grundmodell des Fingers und dem Finger ermittelt werden, wobei die Höhenabweichungen normal zu einer lokalen Oberfläche des Grundmodells sind. Diese Höhenabweichungen können das geometrische Grundmodell ergänzen beziehungsweise korrigieren und so dessen Genauigkeit verbessern. Die Höhenabweichungen können jedoch auch unabhängig von dem geometrischen Grundmodell zur Darstellung des dreidimensionalen Modells dienen.

In einer weitergehenden Ausgestaltung wird für das dreidimensionale Modell ein vorentzerrtes Graustufen-, Farb- oder Multispektralbild der abzubildenden Oberfläche auf das mit den Höhenabweichungen korrigierte geometrische Grundmodell projiziert. Auf diese Weise werden die ebenen optischen Informationen des verwendeten Graustufen-, Farb- oder Multispektralbilds mit den räumlichen Informationen des um die Höhenabweichungen ergänzten geometrischen Grundmodells vereinigt. So stehen mehr Informationen für die Erfassung des zumindest einen Fingermerkmals zur Verfügung, was deren Genauigkeit erhöht.

Die Genauigkeit der Erfassung kann weiter erhöht werden, indem vor der Projektion auf das Grundmodell für jeden Modell-Bildpunkt individuell eine für eine Minutienextraktion optimierte Auswahl aus den fehlerkorrigierten Bildern durchgeführt wird. Zu diesem Zweck können Bilder eines einzelnen betreffenden Bildempfängers, die mit unterschiedlichen Beleuchtungssituationen aufgenommen sind, oder Bilder von verschiedenen Bildempfängern verwendet werden. So können individuell für jeden Modell-Bildpunkt insbesondere Bilder mit dem höchsten Kontrast ausgewählt werden.

Vorzugsweise wird die Auswahl der fehlerkorrigierten Bilder anhand einer Oberflächennormalen eines betreffenden Punktes der abzubildenden Oberfläche, inneren und äußeren Orientierungen der Sensoren sowie anhand von Positionen, Strahlrichtungen und Strahlkegeln von Lichtquellen ermittelt.

In einer weiteren Ausgestaltung wird die Auswahl der fehlerkorrigierten Bilder anhand von Texturanalysen der fehlerkorrigierten und vorzugsweise vorentzerrten Bilder vorgenommen. Durch Verwendung von vorentzerrten Bildern für die Auswahl kann deren Effizienz verbessert werden. Allgemein können in allen Verfahrensschritten anstelle von fehlerkorrigierten Bildern die entsprechenden vorentzerrten Bilder verwendet werden, um die Effizienz zu erhöhen. Vorzugsweise sind alle vorentzerrten Bilder auch fehlerkorrigiert und optional gefiltert.

Es ist von Vorteil, vor der Auswahl Lichtquellen, die einen Oberflächenpixel beleuchten, in Abhängigkeit vom Winkel eines Beleuchtungsstrahles zur Oberflächen-Normalen zu gewichten, wobei fehlerkorrigierten Bildern mit an diesem Oberflächenpixel reflektierend einfallendem Licht und/oder fehlerkorrigierten Bildern, deren Beleuchtungs- und Blickrichtung nahe bei der Oberflächennormalen liegen, ein hohes Gewicht zugeordnet wird. So können diejenigen Bilder mit einem hohen Kontrast mit geringem Aufwand ermittelt werden.

Die Qualität des dreidimensionalen Modells kann verbessert werden, indem Ergebnisse von mehreren Projektionen fehlerkorrigierter Bilder auf das dreidimensionale Modell für jeden Oberflächenpunkt oder eine Auswahl von Oberflächenpunkten in gewichteter Form kombiniert werden. Diese Gewichtung kann zusätzlich oder alternativ zur Auswahl der optimalen fehlerkorrigierten Bilder durchgeführt werden. Vorteilhafterweise wird diese Gewichtung in Übergangsbereichen von einem betreffenden Paar von Bildempfängern zum nächsten durchgeführt.

Biometrische Daten werden üblicherweise für einen sofortigen oder späteren Vergleich erfasst. Für das zumindest eine zu ermittelnde Fingermerkmal stehen daher vorteilhafterweise verschiedene Varianten zur Verfügung. Sie werden zweckmäßigerweise in Abhängigkeit der Art des durchzuführenden Vergleichs durchgeführt.

In einer ersten Variante für das Ermitteln zumindest eines Fingermerkmals wird als Fingermerkmal ein mit dem dreidimensionalen Modell korrespondierender virtueller abgerollter Fingerabdruck erzeugt. Ein solcher virtueller abgerollter Fingerabdruck kann ein flaches, zweidimensionales Schwarzweiß-, Graustufen- oder Multispektral-Abbild sein. Er kann aber auch zusätzlich Informationen über die Vertiefungen und Erhebungen der Hautlinien des Fingers als dritte Dimension einer Topographie der abzubildenden Oberfläche enthalten. Die dritte Dimension einer solchen Hautlinien- und -tälertopographie kann beispielsweise durch Zuordnen von Zusatzhöhenabweichungen zu dem ebenen Abbild gemäß Graustufen oder Farben eines auf das dreidimensionale Modell projizierten fehlerkorrigierten Graustufen-, Farb- oder Multispektralbildes ermittelt werden.

Beispielsweise kann ein virtueller abgerollter Fingerabdruck in Form einer zwei- beziehungsweise dreidimensionalen Textur erzeugt werden. In dieser Form kann er beispielsweise durch Korrelationen mit anderen, in derselben Form vorliegenden Vergleichsabdrücken verglichen werden.

In einer besonderen Ausgestaltung des Verfahrens wird zum Erzeugen des virtuellen abgerollten Fingerabdrucks das dreidimensionale Modell auf eine ebene Fläche umgerechnet, indem das dreidimensionale Modell auf einen Profilkörper orthogonalprojiziert wird und Punkte einer Oberfläche des Profilkörpers zu Punkten der ebenen Fläche zugeordnet werden. Als Profilkörper kann beispielsweise ein Halbzylinder verwendet werden, wobei eine Bogenlänge des Halbzylinders einer linearen Koordinate in der ebenen Fläche zugeordnet wird. Vorzugsweise weist der Halbzylinder dabei an verschiedenen Stellen unterschiedliche Radien auf. Die Umrechnung hat dadurch eine höhere Genauigkeit.

Bevorzugt wird eine Ausgestaltung, in welcher ein Abrollen des dreidimensionalen Modells auf einer Ebene simuliert wird. Mit einer solchen Ausgestaltung kann ein virtueller abgerollter Fingerabdruck mit höchstmöglicher Genauigkeit aus dem dreidimensionalen Modell ermittelt werden.

Eine zweite Variante für das Ermitteln zumindest eines Fingermerkmals sieht vor, dass ein mit dem dreidimensionalen Modell korrespondierender virtueller abgerollter Fingerabdruck erzeugt wird und als Fingermerkmale zweidimensional klassifizierte Minutien aus dem virtuellen abgerollten Fingerabdruck ermittelt werden. Auch in dieser Variante ist ein solcher virtueller abgerollter Fingerabdruck vorzugsweise ein flaches, zweidimensionales Schwarzweiß-, Graustufen- oder Multispektral-Abbild. Das Ermitteln der Minutien erfolgt in bekannter Weise.

Generell kann in einer dritten Variante für das Ermitteln zumindest eines Fingermerkmals als Fingermerkmal eine dreidimensionale Textur aus dem dreidimensionalen Modell erzeugt werden. Eine solche nicht abgerollte dreidimensionale Textur kann beispielsweise durch Korrelieren einfach mit anderen als dreidimensionale Texturen vorliegenden Fingermerkmalen verglichen werden. Auf ein aufwendiges Umrechnen in einen abgerollten Fingerabdruck kann in dieser Variante verzichtet werden.

Für eine vierte Variante für das Ermitteln zumindest eines Fingermerkmals werden als Fingermerkmale dreidimensional klassifizierte Minutien aus dem dreidimensionalen Modell ermittelt. Dreidimensional klassifizierte Minutien werden bisher nicht verwendet. Sie ermöglichen jedoch einen genaueren Vergleich zweier Minutiensätze mit geringerer Wahrscheinlichkeit für eine Fehlerkennung oder unerkannte Fälschung. Eine mögliche Definition für dreidimensionale Minutien wird in dieser Schrift vorgestellt.

In einer besonderen Ausgestaltung wird das dreidimensionale Modell selbst als Fingermerkmal ermittelt. Beispielsweise können Datenbanken aufgebaut werden, die für einen erfassten Fingerabdruck direkt die rekonstruierten Daten des Modells ohne weitere Extraktion, Manipulation oder Vereinfachung speichern. Diese Daten können direkt miteinander verglichen werden, ohne einen Informationsverlust durch Umwandlung in ein anderes Format, beispielsweise durch Extraktion von Minutien, zu riskieren. Auch besteht so die Möglichkeit, zu einem späteren Zeitpunkt, an dem beispielsweise neue Extraktions- oder Vereinfachungsmethoden verfügbar sind, eine Extraktion oder Vereinfachung vor jedem Vergleich auf Kopien von zu vergleichenden Datensätzen anzuwenden, ohne den Datenbankinhalt dauerhaft zu verändern und dabei womöglich den Informationsgehalt zu verringern. Die zu speichernde Datenmenge ist für das dreidimensionale Modell nur unwesentlich größer als die einer zweidimensionalen Aufnahme eines Fingerabdrucks.

Vorteilhafterweise wird die abzubildende Oberfläche in mehreren Durchgängen des Abbildens mit unterschiedlichen Lichtquellen oder Kombinationen davon beleuchtet. Auf diese Weise können für jede der Abbildungsrichtungen eine angepasste Beleuchtungssituation eingestellt werden. Die Durchgänge gleichzeitigen Abbildens werden in schneller Abfolge durchgeführt, beispielsweise mit einer Aufnahmefrequenz von 60 Hz. Die digitalen Bilder der verschiedenen Durchgänge werden vorzugsweise mit einem Anti-Jittering-Algorithmus abgeglichen, um Positionsveränderungen des Fingers zwischen den Durchgängen zu korrigieren.

Eine erfindungsgemäße Anordnung zum Erfassen biometrischer Daten eines Fingers weist mindestens drei Bildempfänger, die auf einem virtuellen Bogen um eine Systemachse angeordnet und auf die Systemachse ausgerichtet sind, und eine Steuereinheit auf. Die Steuereinheit führt dabei in mehreren Arbeitsschritten das erfindungsgemäße Verfahren durch, wobei sie eine gleichzeitige Auslösung der Bildempfänger zur Aufnahme der digitalen Bilder bewirkt. Das zumindest eine Fingermerkmal stellt die Steuereinheit nach Abschluss der Arbeitsschritte an einer Schnittstelle bereit. Alternativ oder zusätzlich kann sie das ermittelte zumindest eine Fingermerkmal mit einem ihr übergebenen Datensatz vergleichen und das Vergleichsergebnis an einer Schnittstelle bereitstellen.

Vorzugsweise nimmt die Steuereinheit zunächst mittels zumindest zweien der Bildempfänger Kontrollbilder auf, um anhand der Kontrollbilder eine Platzierung des Fingers zu überwachen und ausschließlich bei korrekter Platzierung die anderen Arbeitsschritte durchzuführen. Eine falsche Haltung oder eine übermäßige Bewegung des Fingers, die eine korrekte Erfassung von biometrischen Daten ausschließt, wird somit ignoriert.

In einer bevorzugten Ausgestaltung ist neben jedem Bildempfänger mindestens eine Lichtquelle angeordnet, mittels der die abzubildende Oberfläche wenigstens teilweise beleuchtbar ist, wobei jede Lichtquelle unabhängig von den anderen Lichtquellen steuerbar ist. Dies ermöglicht es, die abzubildende Oberfläche in mehreren Durchgängen des Abbildens mit unterschiedlichen Lichtquellen oder Lichtquellenkombinationen zu beleuchten.

Für eine hohe Abbildungsqualität und somit eine hohe Qualität der Erfassung von biometrischen Daten sind die Lichtquellen vorteilhafterweise so angeordnet und steuerbar, dass maßgebliche Grenzflächen von Hautlinien des Fingers das von den Lichtquellen abgestrahlte Licht direkt zu einem der Bildempfänger reflektieren.

Die Erfindung wird im Folgenden anhand von Ausführungsbeispielen erläutert.

Dazu zeigen:
- Figur 1: eine schematische Darstellung eines Fingers in einer erfindungsgemäßen Anordnung mit fünf Sensoren und ihrer Sichtfelder in Frontansicht bezüglich des Fingers,
- Figur 2: eine Schema des erfindungsgemäßen Verfahrens,
- Figur 3: eine schematische Darstellung einer Anordnung mit einem Probekörper in Parallelperspektive,
- Figur 4: zwei Abbildungen des Probekörpers in zwei benachbarten Sensoren,
- Figur 5: schematisch die Stereoparallaxen der beiden Abbildungen aus Figur 4,
- Figur 6: ein im Verfahren verwendbares Grundmodell eines Fingers in Parallelperspektive und in Seitenansicht,
- Figur 7: einen Querschnitt eines dreidimensionalen Modells einschließlich der ermittelten Höhenabweichungen eines Fingers von dem Grundmodell,
- Figur 8: eine schematische Darstellung eines auf das dreidimensionale Modell projizierten Graustufenbildes des Fingerballens,
- Figur 9: ein Schema des weiteren Verlaufes des Verfahrens zum Vergleich erfasster Merkmale in zwei Dimensionen,
- Figur 10: ein Schema des weiteren Verlaufes des Verfahrens zum Vergleich erfasster Merkmale in drei Dimensionen und eine Definition dreidimensional klassifizierter Minutien,
- Figur 11: eine schematische Darstellung der Abrollsimulation einer Projektion der Fingerballenoberfläche auf einen Profilkörper und
- Figur 12: ein abgerollter Fingerabdruck einschließlich des gesamten Fingerballens bis zu den Nagelrändern als Ergebnis des Verfahrens.

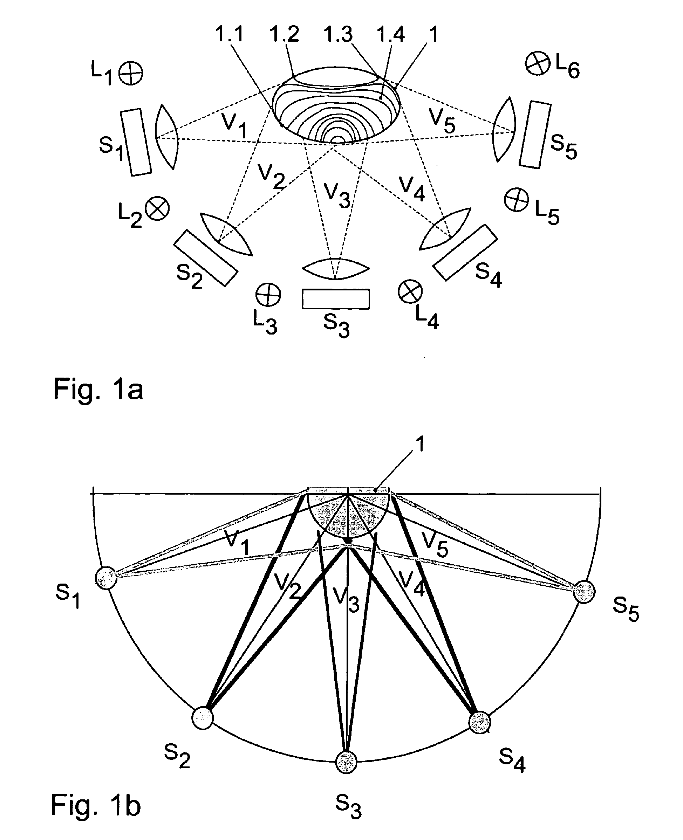

**Figur 1** zeigt in den Teilfiguren a) und b) einen Finger 1, der in eine erfindungsgemäße Anordnung gehalten wird. Die Anordnung besteht aus fünf Bildempfängern in Form von Sensoren Sᵢ, (i=1...5), die bogenförmig angeordnet sind und auf einen gemeinsamen Punkt etwa auf der Mittelachse des Fingers ausgerichtet sind, und einer nicht abgebildeten Steuereinheit. Die Sensoren Sᵢ sind auf dem Bogen in einem Winkel von 36° zueinander bezüglich der Mittelachse des Fingers angeordnet. Die Sensoren Sᵢ sind automatisch fokussierende abbildende Systeme, in Figur 1 sind sie jedoch jeweils lediglich in Form eines CCD und einer Linse dargestellt. Es können aber auch CMOS- oder allgemeine Imaging Devices verwendet werden.

Von der Mantelfläche des Fingers soll eine abzubildende Oberfläche 1.1 erfasst werden, die sich von dem ersten Nagelrand 1.2 zum zweiten Nagelrand 1.3 über den Fingerballen 1.4 erstreckt. Die Sichtfelder Vᵢ der Sensoren Sᵢ überlappen einander. Dabei wird jeder Punkt der abzubildenden Oberfläche 1.1 von mindestens zwei Sensoren Sᵢ in ein jeweiliges zweidimensionales digitales Bild 3 abgebildet. Neben den Sensoren Sᵢ sind Lichtquellen Lₖ , (k=1...6) angeordnet, durch die der Finger 1 und speziell die abzubildende Oberfläche 1.1 beleuchtbar ist.

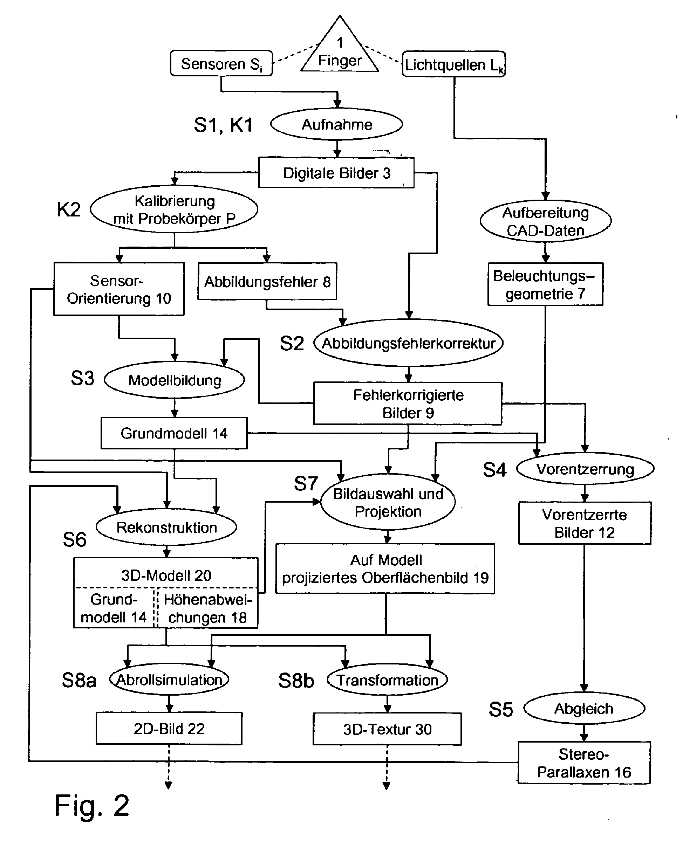

In **Figur 2** ist ein Schema einer Ausführungsform eines erfindungsgemäßen Verfahrens zur Erfassung biometrischer Daten dargestellt. Ellipsenförmige Elemente stellen einen Schritt eines Verfahrens dar, viereckige Elemente sind die Ergebnisse nach einem jeweiligen Verfahrensschritt.

Während des regulären Betriebs werden vor Beginn des eigentlichen Verfahrens mit drei Sensoren Sᵢ wiederholt Bilder aus drei verschiedenen Richtungen aufgenommen, um die Platzierung eines Fingers 1 in der Anordnung zu detektieren. Wird ein Finger 1 detektiert, so wird seine Lage in den aufgenommenen Bildern analysiert und mit einer vorgegebenen Soll-Lage verglichen. Falls der Finger 1 nicht korrekt platziert ist, werden beispielsweise Aufforderungen zum korrekten Platzieren mit Hinweisen auf die dazu notwendigen Bewegungen des Fingers 1 ausgegeben.

Der Finger 1 wird in einem Schritt S beziehungsweise K1 mittels der Sensoren Sᵢ abgebildet, wobei jeweils paarweise zweidimensionale digitale Bilder 3 in benachbarten Sensoren Sₜ und Sₜ₊₁, (t=1...4), aufgenommen werden. Während der Aufnahme eines Paares dieser digitalen Bilder 3 wird jeweils die Lichtquelle Lₜ₊₁ eingeschaltet, so dass in dem jeweils abgebildeten Bereich nahezu senkrechter Lichteinfall auf die abzubildende Oberfläche 1.1 stattfindet. Zu jedem digitalen Bild 3 wird die jeweilige Beleuchtungssituation gespeichert, welche die Information enthält, welche Lichtquellen Lₖ bei der betreffenden Aufnahme eingeschaltet sind und, falls eine Lichtquelle Lₖ verschiedene Lichtwellenlängen aussenden können, die verwendete Wellenlänge der Lichtquelle Lₖ.

Zur geometrischen Kalibrierung des Systems wird einmalig außerhalb des regulären Betriebs ein definierter Probekörper P, der definierte, kreisförmige Markierungen aufweist, in Schritt K1 mittels der Sensoren Sᵢ in digitale Bilder 3 abgebildet. Aus diesen digitalen Bildern 3 des bekannten Probekörpers P werden in einem Kalibrierschritt K2 zum einen die inneren und die äußeren Orientierungen 10 sowie die Linsenverzeichnungen der Sensoren Sᵢ ermittelt, die zu den Abbildungsfehlern 8 zählen. Weitere Abbildungsfehler 8 können beispielsweise Vignettierungen, Farbfehler und Fehlerpixel sein. Sie können aus Bildern weiterer Probekörper abgeleitet werden. Aus den Abbildungsfehlern 8 werden Transformationen berechnet, deren Anwendung auf aufgenommene, zweidimensionale digitale Bilder 3 die darin enthaltenen Abbildungsfehler 8 möglichst kompensiert. Die Kalibrierung ist damit abgeschlossen. Aus dem CAD-Entwurf der Anordnung liegen außerdem aufbereitete Daten der Beleuchtungsgeometrie 7 über die Position, die Strahlrichtung und die Strahlkegel der Lichtquellen Lₖ vor.

Jedes digitale Bild 3 wird in Schritt S2 unter Anwendung der in Schritt K2 ermittelten Transformationen fehlerkorrigiert, anschließend liegen individuell fehlerkorrigierte Bilder 9 vor. Erst damit können sinnvollerweise analytische Formeln verwendet werden, die aus Pixelkoordinaten, innerer und äußerer Orientierung 10 für jeden Pixel einen 3D-Sehstrahl ermitteln.

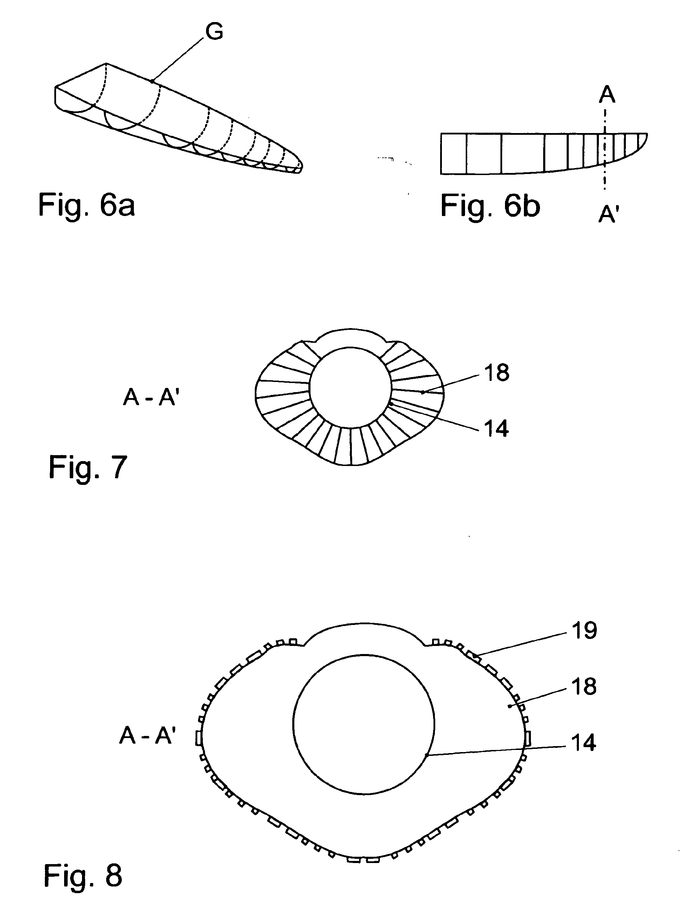

In Schritt S3 werden geometrische Parameter zu einem vorgegebenen geometrischen Grundkörper G ermittelt, um ein Grundmodell 14 für die weiteren Berechnungen zu erhalten. In dem in Figur 6 gezeigten Beispiel handelt es sich um einen Rotationskörper mit entlang der Symmetrieachse segmentweise variierenden Radien. Aus den Silhouetten des Fingers 1 in fehlerkorrigierten Bildern 9 von drei unterschiedlichen Sensoren Sᵢ wird die räumliche Lage der Hauptachse des Grundmodells 14 sowie eine grobe Vorgabe für die Radien des Rotationskörpers abhängig von ihrer Position an dieser Achse ermittelt. Das Grundmodell 14 enthält weiterhin die Beschreibung eines weitgehend regulären Gitters auf der Oberfläche des Rotationskörpers. In einer weitergehenden Ausführungsform kann das Grundmodell 14 ausschließlich aus einem Oberflächengitter bestehen, um seine Genauigkeit zu vergrößern. Ein Rotationskörper wird dabei nicht benötigt.

Die fehlerkorrigierten Bilder 9 werden in Schritt S4 für eine Geometrievorentzerrung auf das Grundmodell 14 aufprojiziert. Damit werden sie zueinander ähnlicher als ursprünglich, was den späteren Abgleich zwischen Paaren von digitalen Bildern 3 wesentlich erleichtert. Die Sehstrahlen jedes einzelnen Pixels werden dazu mit dem Grundmodell 14 geschnitten. Für ein Paar 9ᵢ, 9ᵢ₊₁ fehlerkorrigierter Bilder aus benachbarten Sensoren Sᵢ,Sᵢ₊₁ wird dies beispielsweise wie folgt durchgeführt: Im ersten Bild 9ᵢ wird eine rechteckige Region R(9ᵢ) gewählt, die um das Zentrum des darauf projizierten Überlappungsbereiches zwischen den Bildern 9ᵢ und 9ᵢ₊₁ liegt und eine vorgebbare Ausdehnung besitzt. Für diese Region R(9ᵢ) werden die beiden vorentzerrten Bilder 12ᵢ und entsprechend 12ᵢ₊₁ erzeugt. Innerhalb der Region R(9ᵢ) wird für die Bilder 12ᵢ und 12ᵢ₊₁jeder Bildpunkt des Grundmodells 14 in 3D-Koordinaten transformiert und in die fehlerkorrigierten Bilder 9ᵢ und 9ᵢ₊₁ projiziert. Der dort befindliche Grau- oder Farbwert beziehungsweise, da in der Regel eine nicht ganzzahlige Koordinate ermittelt wird, ein interpolierter Wert wird in die vorentzerrten Bilder 12ᵢ beziehungsweise 12ᵢ₊₁ eingetragen. Zudem werden, um unnötige Rechenschritte zu vermeiden, die Bildkoordinaten der Projektion in die fehlerkorrigierten Bilder 9ᵢ und 9ᵢ₊₁ für eine Wiederverwendung zwischengespeichert.

Für diesen Verfahrensschritt ist nur ein Bild pro Sensor Sᵢ notwendig, das zum einen entweder eine beispielsweise lineare Kombination aus fehlerkorrigierten Bildern 9 mehrerer verschiedener Beleuchtungssituationen oder zum anderen ein einfaches fehlerkorrigiertes Bild 9 des Sensors Sᵢ mit einer speziellen Beleuchtung sein kann. Bei fünf Sensoren Sᵢ liegen anschließend fünf vorentzerrte Bilder 12 vor.

Die vorentzerrten Bilder 12 werden in Schritt S5 an allen oder sehr vielen Punkten jeweils zweier Sensoren Sᵢ paarweise miteinander verglichen, um korrespondierende Punkte zu ermitteln. Es werden sinnvollerweise nur die vorentzerrten Bilder 12 benachbarter Sensoren Sᵢ, Sᵢ₊₁ abgeglichen, so dass dieser Prozess bei fünf Sensoren Sᵢ viermal durchgeführt wird. Als Ergebnis liegen für jedes benachbarte Paar von Sensoren Sᵢ, Sᵢ₊₁ zweidimensionale Stereo-Parallaxen 16 vor. Diese Stereo-Parallaxen 16 zeigen für jeden Bildpunkt im vorentzerrten Bild 12; des einen Sensors Sᵢ an, wo sich im vorentzerrten Bild 12ᵢ₊₁ des zweiten Sensors Sᵢ₊₁ derselbe Punkt des Fingers 1 befindet. In diesem Verfahrensschritt kann insbesondere das bekannte HVFM-Verfahren verwendet werden, wobei jeder Vergleichspunkt in die betreffenden fehlerkorrigierten Bilder 9 rückprojiziert wird.

In Schritt S6 werden Höhenabweichungen zwischen dem Grundmodell 14 und der abzubildenden Oberfläche 1.1 ermittelt. Für jeden diskreten Punkt des Oberflächengitters auf dem Grundmodell 14 wird in den dafür infragekommenden Stereo-Parallaxen 16 geprüft, ob es entlang der Oberflächennormalen im Zentrum des Gitterpunktes einen Schnitt von zwei korrespondierenden Sehstrahlen gibt. Dieser Schritt ist in Form des "Locus"-Verfahrens bekannt. Als Ergebnis liegt ein dreidimensionales Modell 20 in Form des Grundmodells 14 mit Höhenabweichungen 18 vor, wobei jede Höhenabweichung 18 parallel zur betreffenden Oberflächennormalen im Zentrum eines jeweiligen Gitterpunktes des Oberflächengitters angeordnet ist.

In Schritt S7 erfolgt eine Auswahl eines für den aktuellen Objektpunkt am besten geeigneten fehlerkorrigierten Bildes 9 aus den aufgenommenen Kombinationen von Sensoren Sᵢ und Beleuchtungssituationen beziehungsweise aus einer Auswahl der am besten geeigneten Bilder mit nachfolgender Gewichtung. Als Kriterien gelten die Blickrichtung des jeweiligen Sehstrahls zur Oberflächennormalen, die Differenz zum jeweiligen Einfallswinkel der Beleuchtung sowie optional die Distanz zwischen jeweiligem Sensor Sᵢ und abzubildender Oberfläche 1.1. Optimiert wird dabei die Totalreflexion an den Fingerabdruck-Rillen sowie die Auflösung. Der Pixel wird aus den ausgewählten fehlerkorrigierten Bildern 9 auf das rekonstruierte dreidimensionale Modell 20, bestehend aus dem Grundmodell 14 mit Höhenabweichungen 18, projiziert. Als Ergebnis dieses Schritts liegt als Teil des dreidimensionalen Modells 20 eine der Geometrie des dreidimensionalen Modells 20 zugeordnete Menge von Pixeln vor. Diese Menge von Pixeln kann beispielsweise in Form einer zweidimensionalen Oberflächentextur mit einem zugeordneten Feld von Texturkoordinaten gespeichert werden. Die Kombination von zweidimensionaler Oberflächentextur mit zugeordnetem Feld von Texturkoordinaten kann auch als auf das dreidimensionale Modell 20 projiziertes Oberflächenbild 19 bezeichnet werden.

In einer alternativen Ausgestaltung wird in Schritt S6 das Oberflächengitter so engmaschig bestimmt, dass die Höhenabweichungen nicht nur wesentliche Stützpunkte der abzubildenden Oberfläche 1.1 repräsentieren, sondern dass sie die Hautleisten und die Täler zwischen den Hautleisten auflösen. Der Schritt S7 kann in einer solchen Ausgestaltung entfallen. Eine solche Ausgestaltung ermöglicht ein sehr genaues dreidimensionales Modell 20, erfordert jedoch einen hohen Rechenaufwand.

Es ist möglich, die stereoskopische Auswertung der Schritte S6 und S7 nur für Teilbereiche der abzubildenden Oberfläche 1.1 durchzuführen, beispielsweise nur dort, wo überlappende Bilder benachbarter Sensoren Sᵢ, Sᵢ₊₁ eine hohe Beleuchtungsqualität aufweisen und eindeutige Stereo-Parallaxen 16 ergeben. Dem Rest der Oberfläche des dreidimensionalen Modells 20 werden dann monoskopisch die entsprechenden Bereiche aus fehlerkorrigierten Bildern 9 zugeordnet. In einem solchen Fall werden zweckmäßigerweise an Grenzen zwischen stereoskopisch und monoskopisch ermittelten Bereichen und an Grenzen zwischen unterschiedlichen monoskopisch ermittelten Bereichen mittels Wichtungen gleichmäßige Übergänge erzeugt.

Um zweidimensionale, mit herkömmlichen Datenbanken kompatible Fingerabdrücke zu erhalten, wird anschließend in Schritt S8a ein Abrollen des dreidimensionalen Modells 20 auf einer ebenen Fläche simuliert, wodurch ein dem Abrollvorgang beim herkömmlichen Herstellen eines Fingerabdrucks entsprechendes zweidimensionales Bild 22 erzeugt wird. Es handelt sich dabei beispielsweise um eine Abbildung der Oberflächentextur des dreidimensionalen Modells 20 auf die zweidimensionale Fläche des Fingerabdruckbildes 22. In einer besonderen Ausgestaltung kann ein solcher virtueller abgerollter Fingerabdruck anhand von Graustufen oder Farbwerten des projizierten Oberflächenbildes 19 in einer dritten Koordinatendimension mit den Hautlinien und -tälern entsprechenden Höhenwerten versehen werden, so dass eine Topographie der abzubildenden Oberfläche 1.1 vorliegt. In einer Ausgestaltung, die aufgrund eines engmaschigen Oberflächengitters auf die Projektion des Schritts 7 verzichten kann, wird der virtuelle abgerollte Fingerabdruck ausschließlich anhand einer Rotation des Grundmodells 14 mit den Höhenabweichungen 18 entlang einer ebenen Fläche aus den Berührungspunkten mit der ebenen Fläche berechnet.

Reale Fingerabdrücke mit Tinte weisen auf Papier dunkle Stellen dort auf, wo Hautleisten das Papier berührt haben. Da optisch aufgenommene Hautleisten hell und die Täler dazwischen dunkel erscheinen, wird der virtuell abgerollte Fingerabdruck zweckmäßigerweise vor einem Vergleich mit einem herkömmlich aufgenommenen, digitalisieren Fingerabdruckbild invertiert.

Alternativ oder zusätzlich wird in Schritt S8b das dreidimensionale Modell 20, bestehend aus dem Grundmodell 14 mit den Höhenabweichungen 18 und dem projizierten Oberflächenbild 19, in eine 3D-Textur 30 transformiert, die in weiteren Verfahrenschritten verarbeitet und verglichen werden kann. Eine 3D-Textur ist eine aus dem Gebiet der Computergrafik bekannte, in der Regel quaderförmige Darstellung einer Punktmenge, wobei jedem Punkt der Punktmenge drei orthogonalen Koordinaten sowie wenigstens ein Intensitätswert zugeordnet sind. Zwei 3D-Texturen 30 können beispielsweise durch Korrelation direkt miteinander verglichen werden. Im Sinne der Erfindung kann eine 3D-Textur alternativ aus einer 3D-Oberflächenbeschreibung, beispielsweise einem Polygongitter, einem Graustufen- oder Farbbild, sowie Informationen über die Zuordnung zwischen jedem Bildpunkt und einer zugehörigen Position auf der 3D-Oberflächenbeschreibung bestehen.

In einer alternativen Ausführungsform kann eine 3D-Textur 30 unmittelbar anstelle der Ermittlung des projizierten Oberflächenbildes 19 ermittelt werden. Auch aus einer solchen 3D-Textur 30 kann ein virtueller abgerollter Fingerabdruck erzeugt werden.

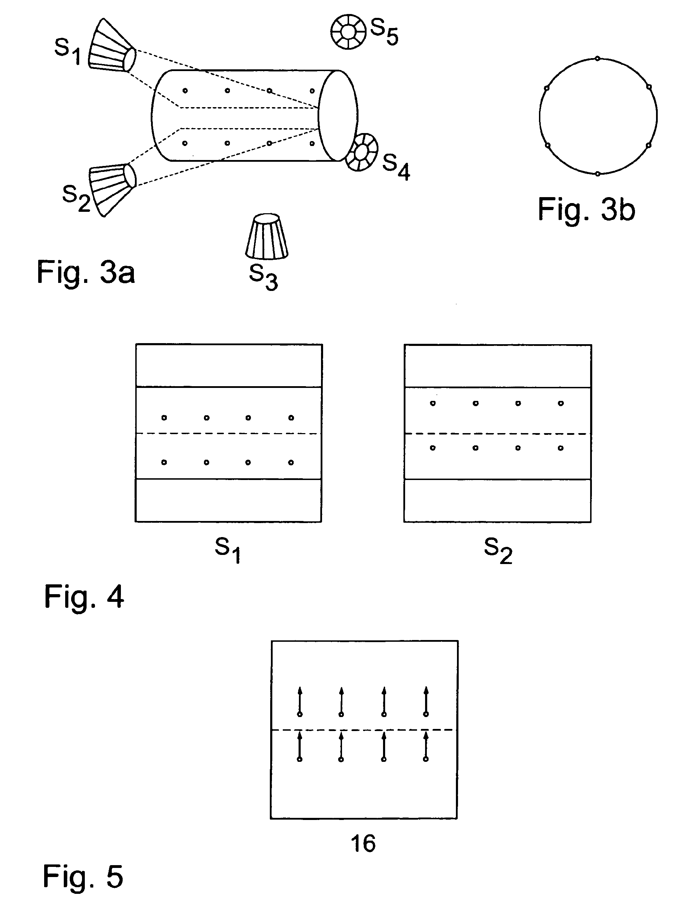

**Figur 3** zeigt in den Teilfiguren **a**) und **b**) eine Anordnung mit fünf Sensoren Sᵢ. Dazwischen ist ein Probekörper P mit definierten Markierungen M platziert. Die Markierungen sind dunkel auf hellem Untergrund abgebildet, können jedoch auch hell auf dunklem Untergrund vorgesehen werden. Die Mittelebenen E₁ und E₂ der Sichtfelder der Sensoren S₁ und S₂ sind eingezeichnet.

In **Figur 4** sind die digitalen Bilder 3 der Sensors S₁ und S₂ aus der Aufnahme des Probekörpers P abgebildet.

**Figur 5** zeigt Stereo-Parallaxen 16, die aus den digitalen Bildern 3 ermittelt wurden.

**Figur 6** stellt in den Teilfiguren **a**) und **b**) einen Grundkörper G in Form eines Rotationskörpers mit variierenden Radien dar.

**Figur 7** zeigt einen Querschnitt eines Grundmodells 14, das aus dem Grundkörper G besteht, und dazu oberflächennormale Höhenabweichungen 18.

In **Figur 8** ist das dreidimensionale Modell 20 mit dem projizierten Oberflächenbild 19 in Graustufen auf dem Modell 14 mit Höhenabweichungen 18 dargestellt.

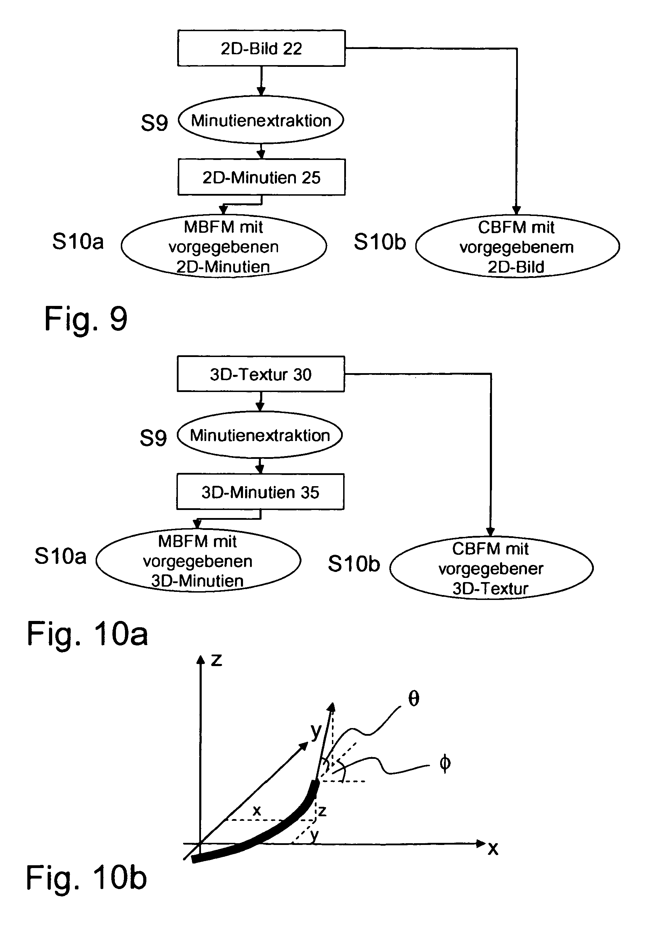

In **Figur 9** sind weitere Verfahrensschritte zum Vergleich erfasster Fingeroberflächen im Correlation-Based-Fingerprint-Matching (CBFM) beziehungsweise Minutiae-Based-Fingerprint-Matching (MBFM) dargestellt, wobei als Vergleichsgegenstand ein herkömmlicher, zweidimensionaler Fingerabdruck in digitalisierter Form verwendet wird. Im CBFM-Verfahren werden digitale Darstellungen der Abbilder zweier zu vergleichender Fingerabdrücke miteinander korreliert, um eine Aussage über ihre Ähnlichkeit zu gewinnen. Im MBFM-Verfahren wird zunächst ein Satz zweidimensional klassifizierter Minutien 25 aus dem ermittelten virtuellen abgerollten Fingerabdruck extrahiert und mit vorgegebenen zweidimensional klassifizierten Minutiendaten verglichen.

Eine Erweiterung auf den dreidimensionalen Fall zeigt **Figur 10** in T**eilfigur a)** in analogen Verfahrensschritten. Eine zweidimensional klassifizierte Minutie 25 wird in der Regel durch Attribute zu ihrem Fundort (x/y) im Fingerabdruck, ihrem Ausrichtungswinkel θ, ihrem Typ und ihrer Aussagekraft beschrieben. Als Typ kommen beispielsweise ein Linienende oder eine Bifurkation infrage. Die Aussagekraft wird anhand der Bildqualität des Fingerabdrucks in der Umgebung der Minutie bestimmt. Diese Beschreibung kann in einfacher Weise auf den dreidimensionalen Fall erweitert werden. Teilfigur b) zeigt die dreidimensionale Definition. Eine dreidimensional klassifizierte Minutie 35 weist entsprechend Attribute zu ihrem räumlichen Fundort (x/y/z) im dreidimensionalen Modell 20, zu ihren Ausrichtungen θ und φ, ihrem Typ und ihrer Aussagekraft auf. Da eine dreidimensional klassifizierte Minutie 35 im Raum ausgerichtet ist, sind zwei Ausrichtungswinkel θ ,φ zur Beschreibung erforderlich.

Ein Vergleich auf Basis eines CBFM-Verfahrens ist auch im dreidimensionalen Raum möglich. Zu diesem Zweck werden 3D-Texturen 30 zweier Fingerabdrücke verglichen. Eine 3D-Textur 30 kann mit geringem Aufwand aus dem dreidimensionalen Modell 20 mit Höhenabweichungen 18 ermittelt werden.

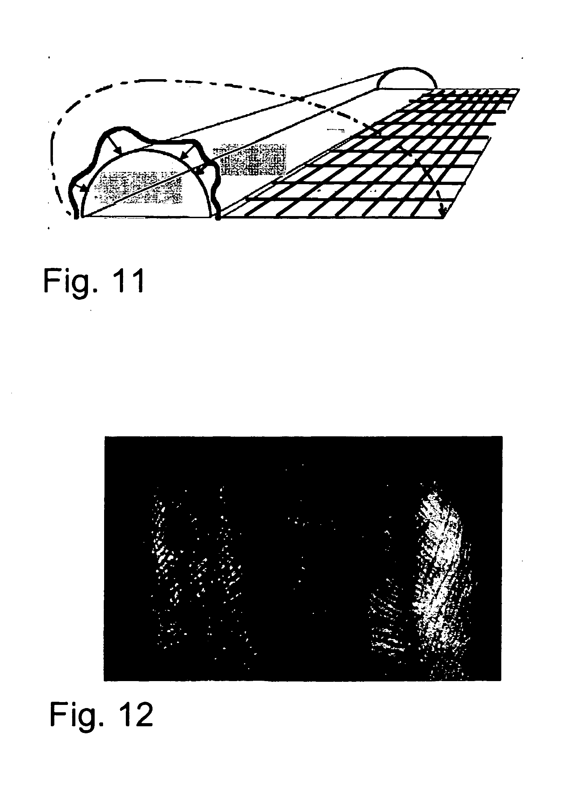

**Figur 11** zeigt als Beispiel einen halbzylindrischen Profilkörper für die Simulation der Abrollbewegung als Orthogonalprojektion des Oberflächenbildes 19 auf eine gekrümmte Fläche, deren Koordinaten auf eine ebene Fläche umgerechnet werden. In exakteren Ausführungsformen wird eine Abrollbewegung des Grundmodells 14 einschließlich der Höhenabweichungen 18 für jeden Punkt des Gitters an der Oberfläche des dreidimensionalen Modells 20 simuliert. Somit werden auch Verzerrungen aufgrund variierender Fingerabmessungen beim Erzeugen des virtuellen abgerollten Fingerabdrucks korrekt berücksichtigt.

**Figur 12** zeigt schließlich exemplarisch ein Ergebnis der Abrollsimulation.

Zweckmäßigerweise wird bei der Aufnahme der digitalen Bilder 3 in Schritt S1 des Verfahrens eine Serie von gleichzeitigen Aufnahmen in mehreren Durchgängen mit unterschiedlichen Beleuchtungssituationen durchgeführt. Es können beispielsweise drei Durchgänge durchgeführt werden. In einem ersten Durchgang werden digitale Bilder 3 zur Ermittlung einer Silhouette des Fingers 1 aufgenommen, aus der das geometrische Grundmodell 14 erstellt wird. In diesem ersten Durchgang werden alle Lichtquellen Lₖ zusammen eingeschaltet und alle Sensoren Sᵢ gleichzeitig ausgelöst. In einem zweiten Durchgang werden digitale Bilder 3 für eine stereoskopische Auswertung aufgenommen. Es werden hier vier Unterdurchgänge durchgeführt, einer für jedes Paar benachbarter Sensoren Sᵢ, Sᵢ₊₁. Dabei wird in jedem Unterdurchgang die zwischen dem betreffenden Sensorpaar liegende Lichtquelle Lₖ eingeschaltet. Anschließend werden in einem dritten Durchgang für die monoskopische Zuordnung fünf Unterdurchgänge durchgeführt, einer für jeden Sensoren Sᵢ. Dabei werden in jedem Unterdurchgang die beiden den betreffenden Sensor Sᵢ umgebenden Lichtquellen Lᵢ, Lᵢ₊₁ eingeschaltet und der betreffende Sensor Sᵢ ausgelöst.

Es ist möglich, die Anzahl der Unterdurchgänge zu verringern, um das Verfahren zu beschleunigen. Zu diesem Zweck können beispielsweise im dritten Durchgang die Sensoren S₁ und S₅ und die betreffenden Lichtquellen L₁, L₂, L₅, L₆ zusammen ausgelöst werden. Dies bedeutet nur eine vernachlässigbare Beeinflussung der Bildaufnahme.

Die Verfahrensschritte, die dreidimensional klassifizierte Minutien und die dreidimensionale Textur erzeugen und/oder vergleichen, können auch unabhängig von dem erfindungsgemäßen Verfahren mit anderweitig erzeugten dreidimensionalen Abbildungen von Hautoberflächen verwendet werden.

### BEZUGSZEICHENLISTE

- 1: Finger
1.1 Abzubildende Oberfläche
1.2 Erster Nagelrand
1.3 Zweiter Nagelrand
1.4 Ballen
- 3: Digitales Bild
- 7: Beleuchtungsgeometrie
- 8: Abbildungsfehler
- 9: Fehlerkorrigiertes Bild
- 10: Sensor-Orientierung
- 12: Vorentzerrtes Bild
- 14: Grundmodell
- 16: Stereo-Parallaxen
- 18: Höhenabweichungen
- 19: Projiziertes Oberflächenbild
- 20: Dreidimensionales Modell
- 22: 2D-Bild
- 25: 2D-Minutien
- 30: 3D-Textur
- 35: 3D-Minutien

- Sᵢ: Sensor
- Vᵢ: Sichtfeld
- Lₖ: Lichtquelle
- G: Grundkörper
- Eᵢ: Mittelebene

## Patentansprüche

1. Verfahren zum Erfassen biometrischer Daten eines Fingers (1) mit den Schritten:
- berührungsloses Abbilden einer abzubildenden Oberfläche (1.1) des Fingers (1) in gleichzeitig mindestens drei unterschiedliche Richtungen in digitale Bilder (3), wobei jeder Punkt der abzubildenden Oberfläche (1) in zumindest zwei der Richtungen abgebildet wird, wobei die abzubildende Oberfläche (1.1) von einem ersten Nagelrand (1.2) zu einem zweiten Nagelrand (1.3) über einen Ballen (1.4) des Fingers (1) reicht und wobei das Abbilden mittels mindestens drei Bildempfänger (Sᵢ), die auf einem virtuellen Bogen um eine Systemachse angeordnet und auf die Systemachse ausgerichtet sind, durchgeführt wird,
- Bestimmen eines Grundmodells (14) aus ermittelten geometrischen Parametern eines vorgegebenen geometrischen Grundkörpers (G) und aus Silhouetten des Fingers (1) in fehlerkorrigierten Bildern (9) von drei unterschiedlichen Sensoren (Sᵢ),
- Ermitteln von vorentzerrten Bildern (12) mittels Geometrievorentzerrung der digitalen Bilder (3) anhand des Grundmodells (14), wobei die fehlerkorrigierten Bilder (9) auf das Grundmodell (14) aufprojiziert werden und jeder Vergleichspunkt in die betreffenden fehlerkorrigierten Bilder (9) rückprojiziert wird,
- Rekonstruieren eines dreidimensionalen Modells (20) der abzubildenden Oberfläche (1.1) mittels einer stereoskopischen Auswertung der vorentzerrten Bilder (12) und
- Ermitteln zumindest eines Fingermerkmals anhand des dreidimensionalen Modells (20).

2. Verfahren nach Anspruch 1, **dadurch gekennzeichnet, dass** das dreidimensionale Modell (20) basierend auf dem Grundmodell (14) rekonstruiert wird, wobei dem dreidimensionalen Modell eine Hautlinienstruktur und/oder eine Oberflächentextur der abzubildenden Oberfläche (1.1) zugeordnet wird.

3. Verfahren nach einem der vorhergehenden Ansprüche, **dadurch gekennzeichnet, dass** für das Abbilden Kameras (Sᵢ) verwendet werden, wobei Abbildungsfehler der Kameras in den digitalen Bildern (3) rechnerisch korrigiert werden.

4. Verfahren nach einem der vorhergehenden Ansprüche, **dadurch gekennzeichnet, dass** jedes digitale Bild (3) in einer Schattierungskorrektur gefiltert wird, wobei ein lokaler Kontrast erhalten bleibt und die durchschnittlichen Intensitätswerte der digitalen Bilder (3) normiert werden.

5. Verfahren nach einem der vorhergehenden Ansprüche, **dadurch gekennzeichnet, dass** für die stereoskopische Auswertung zweidimensionale Parallaxen (16) aus Paarkombinationen der vorentzerrten Bilder (12) ermittelt werden.

6. Verfahren nach einem der vorhergehenden Ansprüche, **dadurch gekennzeichnet, dass** für das Grundmodell (14) wenigstens ein Teil eines Rotationskörpers mit entlang seiner Rotationsachse segmentweise variierenden Radien verwendet wird, wobei die Rotationsachse und die Radien anhand von Umrissen des Fingers (1) in mindestens zwei digitalen Bildern (3) unterschiedlicher Abbildungsrichtungen bestimmt werden.

7. Verfahren nach einem der vorhergehenden Ansprüche, **dadurch gekennzeichnet, dass** für das dreidimensionale Modell (20) Höhenabweichungen (18) zwischen dem Grundmodell (14) des Fingers (1) und dem Finger (1) ermittelt werden, wobei die Höhenabweichungen (18) normal zu einer lokalen Oberfläche des Grundmodells (14) sind.

8. Verfahren nach Anspruch 7, **dadurch gekennzeichnet, dass** für das dreidimensionale Modell (14) ein fehlerkorrigiertes Graustufen-, Farb- oder Multispektralbild (9) der abzubildenden Oberfläche auf das mit den Höhenabweichungen (18) korrigierte Grundmodell (14) projiziert wird.

9. Verfahren nach Anspruch 8, **dadurch gekennzeichnet, dass** vor der Projektion auf das Grundmodell (14) für jeden Modell-Bildpunkt individuell eine für eine Minutienextraktion optimierte Auswahl aus den fehlerkorrigierten Bildern (9) durchgeführt wird, wobei die Auswahl der fehlerkorrigierten Bilder (9) anhand einer Oberflächennormalen eines betreffenden Punktes der abzubildenden Oberfläche (1.1), inneren und äußeren Orientierungen von Bildempfängern (Sᵢ) sowie anhand von Positionen, Strahlrichtungen und Strahlkegeln von Lichtquellen (Lₖ) oder anhand von Texturanalysen der fehlerkorrigierten Bilder (9) ermittelt wird.

10. Verfahren nach Anspruch 9, **dadurch gekennzeichnet,** vor der Auswahl Lichtquellen (Lₖ), die einen Oberflächenpixel beleuchten, in Abhängigkeit vom Winkel eines Beleuchtungsstrahles zur Oberflächen-Normalen gewichtet werden, wobei fehlerkorrigierten Bildern (9) mit an diesem Oberflächenpixel reflektierend einfallendem Licht und/oder fehlerkorrigierten Bildern (9), deren Beleuchtungs- und Blickrichtung nahe bei der Oberflächennormalen liegen, ein hohes Gewicht zugeordnet wird.

11. Verfahren nach einem der Ansprüche 8 bis 10, **dadurch gekennzeichnet, dass** Ergebnisse von mehreren Projektionen fehlerkorrigierter Bilder (9) auf das dreidimensionale Modell (20) für jeden Oberflächenpunkt oder eine Auswahl von Oberflächenpunkten in gewichteter Form kombiniert werden.

12. Verfahren nach einem der Ansprüche 1 bis 11, **dadurch gekennzeichnet, dass** als Fingermerkmal ein mit dem dreidimensionalen Modell (20) korrespondierender virtueller abgerollter Fingerabdruck erzeugt wird.

13. Verfahren nach Anspruch 12, **dadurch gekennzeichnet, dass** zum Erzeugen des virtuellen abgerollten Fingerabdrucks das dreidimensionale Modell (20) auf eine ebene Fläche umgerechnet wird, indem das dreidimensionale Modell (20) auf einen Profilkörper orthogonalprojiziert wird und Punkte einer Oberfläche des Profilkörpers zu Punkten der ebenen Fläche zugeordnet werden.

14. Verfahren nach einem der Ansprüche 1 bis 11, **dadurch gekennzeichnet, dass** ein mit dem dreidimensionalen Modell (20) korrespondierender virtueller abgerollter Fingerabdruck erzeugt wird und im Minutiae-Based-Fingerprint-Matching-Verfahren als Fingermerkmale zweidimensional klassifizierte Minutien aus dem virtuellen abgerollten Fingerabdruck extrahiert werden, wobei die zweidimensional klassifizierten Minutien durch Attribute zu ihrem Fundort im Fingerabdruck, ihrem Ausrichtungswinkel, ihrem Typ und ihrer Aussagekraft beschrieben werden.

15. Verfahren nach einem der Ansprüche 1 bis 11, **dadurch gekennzeichnet, dass** als Fingermerkmal eine dreidimensionale Textur (30) aus dem dreidimensionalen Modell (20) erzeugt wird.

16. Verfahren einem der Ansprüche 1 bis 11, **dadurch gekennzeichnet, dass** als Fingermerkmale dreidimensional klassifizierte Minutien aus dem dreidimensionalen Modell (20) ermittelt werden.

17. Verfahren nach einem der vorhergehenden Ansprüche, **dadurch gekennzeichnet, dass** die abzubildende Oberfläche (1.1) in mehreren Durchgängen des Abbildens mit unterschiedlichen Lichtquellen (Lₖ) oder Kombinationen davon beleuchtet wird.

18. Anordnung zum Erfassen biometrischer Daten eines Fingers (1), aufweisend:
- mindestens drei Bildempfänger (Sᵢ), die auf einem virtuellen Bogen um eine Systemachse angeordnet und auf die Systemachse ausgerichtet sind, wobei mittels der Bildempfänger (Sᵢ) eine abzubildende Oberfläche (1.1) eines an der Systemachse platzierten Fingers (1) in eine entsprechende Anzahl unterschiedlicher Richtungen berührungslos in digitale Bilder (3) abbildbar ist, wobei jeder Punkt der abzubildenden Fläche (1.1) in zumindest zwei der Richtungen abbildbar ist und wobei die abzubildende Oberfläche (1.1) von einem ersten Nagelrand (1.2) zu einem zweiten Nagelrand (1.3) über einen Ballen (1.4) des Fingers (1) reicht, und
- eine Steuereinheit, die in mehreren Arbeitsschritten:
a) eine gleichzeitige Auslösung der Bildempfänger (Sᵢ) zur Aufnahme der digitalen Bilder (3) bewirkt,
b) ein Grundmodell (14) aus ermittelten geometrische Parametern eines vorgegebenen geometrischen Grundkörpers (G) und aus Silhouetten des Fingers (1) in fehlerkorrigierten Bildern (9) von drei unterschiedlichen Sensoren (Sᵢ) bestimmt,
c) vorentzerrte Bildern (12) mittels Geometrievorentzerrung der digitalen Bilder (3) anhand des Grundmodells (14) durch Aufprojizieren der fehlerkorrigierten Bilder (9) auf das Grundmodell (14) und Rückprojizieren jedes Vergleichspunktes in die betreffenden fehlerkorrigierten Bilder (9) ermittelt,
d) ein dreidimensionales Modell (20) der abzubildenden Oberfläche (1.1) mittels einer stereoskopischen Auswertung der vorentzerrten Bilder (12) rekonstruiert und
e) zumindest ein Fingermerkmal anhand des dreidimensionalen Modells (20) ermittelt.

19. Anordnung nach Anspruch 18, **dadurch gekennzeichnet, dass** die Steuereinheit zunächst mittels zumindest zweien der Bildempfänger (Sᵢ) Kontrollbilder aufnimmt und anhand der Kontrollbilder eine Platzierung des Fingers (1) überwacht und ausschließlich bei korrekter Platzierung die anderen Arbeitsschritte durchführt.

20. Anordnung nach Anspruch 18 oder 19, **dadurch gekennzeichnet, dass** neben jedem Bildempfänger (Sᵢ) mindestens eine Lichtquelle (Lₖ) angeordnet ist, mittels der die abzubildende Oberfläche (1.1) wenigstens teilweise beleuchtbar ist, wobei jede Lichtquelle (Lₖ) unabhängig von den anderen Lichtquellen (Lₖ) steuerbar ist.

21. Anordnung nach Anspruch 20, **dadurch gekennzeichnet, dass** die Lichtquellen (Lₖ) so angeordnet und steuerbar sind, dass maßgebliche Grenzflächen von Hautlinien des Fingers (1) das von den Lichtquellen (Lₖ) abgestrahlte Licht direkt zu einem der Bildempfänger (Sᵢ) reflektieren.

## Claims

1. Method for acquiring biometric data of a finger (1), comprising the steps:
- touchlessly and simultaneously imaging a surface to be imaged (1.1) of the finger (1) along at least three different directions into digital images (3), wherein each point of said surface to be imaged (1.1) is imaged along at least two of said directions, wherein said surface to be imaged (1.1) extends from a first nail edge (1.2) across a ball (1.4) to a second nail edge (1.3) of the finger (1), and wherein imaging is performed using at least three image receivers (Sᵢ), said image receivers being arranged on a virtual arc around a system axis and being aligned to said system axis,
- determining a basic model (14) from the geometric parameters determined from a predefined geometric base body (G) and from silhouettes of the finger (1) in aberration-corrected images (9) from three different sensors (Sᵢ),
- determining pre-equalized images (12) through the geometrical pre-equalization of the digital images (3) using said basic model (14), wherein said aberration-corrected images (9) are projected onto said basic model (14) and every comparison point is projected back onto the respective aberration-corrected images (9),
- reconstructing a three-dimensional model (20) of the surface to be imaged (1.1) using a stereoscopic analysis of the pre-equalized images (12) and
- determining at least one finger characteristic using the three-dimensional model (20).

2. Method as claimed in claim 1, **characterized in that**, the three-dimensional model (20) is reconstructed on the basis of the basic model (14), wherein a dermal line structure and/or a surface texture of the surface to be imaged (1.1) is assigned to the three-dimensional model (20).

3. Method as claimed in any preceding claim, **characterized in that**, cameras (Sᵢ) are used for said imaging, wherein aberrations of said cameras (Sᵢ) are calculationally corrected within the digital images (3).

4. Method as claimed in any preceding claim, **characterized in that**, each digital image (3) is filtered in a shading correction, wherein a local contrast is preserved and the digital images' (3) average intensity values are normalized.

5. Method as claimed in any preceding claim, **characterized in that**, for said stereoscopic analysis, two-dimensional parallaxes (16) are determined from pair combinations of the pre-equalized images (12).

6. Method as claimed in any preceding claim, **characterized in that**, for said basic model (14), at least a part of a solid of revolution having radii varying by segments along its rotation axis is used, wherein the rotation axis and said radii are determined using outlines of the finger (1) in at least two digital images (3) of different imaging directions.

7. Method as claimed in any preceding claim, **characterized in that**, for said three-dimensional model (20), height deviations (18) between said basic model (14) of the finger (1) and the finger (1) are determined, the height deviations (18) being orthogonal to a local surface of the basic model (14).

8. Method as claimed in claim 7, **characterized in that**, for said three-dimensional model (14), an aberration-corrected grayscale, color or multispectral image (9) of the surface to be imaged (1.1) is projected onto said basic model (14) corrected by said height deviations (18).

9. Method as claimed in claim 8, **characterized in that**, before said projecting onto the basic model (14), a selection optimized for an extraction of minutiae is performed individually for each model image point out of the aberration-corrected images (9), wherein the selection of said aberration-corrected images (9) is done using a surface normal at a respective point of the surface to be imaged (1.1), inner and outer orientations of image receivers (Sᵢ) as well as using positions, beam directions, and beam cones of light sources (Lₖ) or using texture analyses of said aberration-corrected images (9).

10. Method as claimed in claim 9, **characterized in that**, before said selection, light sources (Lₖ) that illuminate a surface pixel are weighted depending on an angle between an illuminating beam and the surface normal, wherein a large weight is assigned to aberration-corrected images (9) that exhibit reflectingly incident light at this surface pixel and/or to aberration-corrected images (9) whose direction of illumination and line of vision are in the vicinity of the surface normal.

11. Method as claimed in any claim 8 through 10, **characterized in that**, results of several projections of aberration-corrected images (9) onto the three-dimensional model (20) are combined in a weighted form for each surface point or for a selection of surface points.

12. Method as claimed in any claim 1 through 11, **characterized in that**, as said finger characteristic, a virtual unrolled fingerprint is created, the virtual unrolled fingerprint corresponding with said three-dimensional model (20).

13. Method as claimed in claim 12, **characterized in that**, for creating said virtual unrolled fingerprint, the three-dimensional model (20) is converted to a plane area by orthogonally projecting the three-dimensional model (20) onto a profile body and assigning points of a surface of said profile body to points of said plane area.

14. Method as claimed in any claim 1 through 11, **characterized in that**, a virtual unrolled fingerprint corresponding with said three-dimensional model (20) is generated and, as finger characteristics, two-dimensionally classified minutiae are derived from said virtual unrolled fingerprint using the minutiae-based fingerprint matching method, wherein said two-dimensionally classified minutiae are described by attributes referring to their location in the fingerprint, to their orientation angle, to their type and to their significance.

15. Method as claimed in any claim 1 through 11, **characterized in that**, as said finger characteristic, a three-dimensional texture (30) is generated from said three-dimensional model (20).

16. Method as claimed in any claim 1 through 11, **characterized in that**, as finger characteristics, three-dimensionally classified minutiae are derived from said three-dimensional model (20).

17. Method as claimed in any preceding claim, **characterized in that**, said surface to be imaged (1.1) is illuminated using different light sources (Lₖ) or combinations thereof while performing several passes of imaging.

18. Arrangement for acquiring biometric data of a finger (1), comprising:
- at least three image receivers (Sᵢ) located on a virtual arc around a system axis and aligned toward said system axis, wherein a surface to be imaged (1.1) of a finger (1) placed at the system axis is imageable by means of said image receivers (Sᵢ) along a corresponding number of different directions touchlessly into digital images (3), wherein each point of the surface to be imaged (1.1) is imageable along at least two of said directions and wherein the surface to be imaged (1.1) extends from a first nail edge (1.2) across a ball (1.4) to a second nail edge (1.3) of the finger (1), and
- a control unit which, in several work steps:
a) effects the simultaneously triggering of said image receivers (Sᵢ) for taking said digital images (3),
b) determines a basic model (14) using the geometrical parameters of a predefined geometrical base body (G) and using silhouettes of the finger (1) in aberration-corrected images (9) of three different sensors (Sᵢ),
c) determines pre-equalized images (12) using the geometrical pre-equalization of the digital images (3) using said basic model (14) by projecting said aberration-corrected images (9) onto said basic model (14) and projecting each comparison point back into the respective aberration-corrected images (9),
d) reconstructs a three-dimensional model (20) of the surface to be imaged (1.1) using a stereoscopic analysis of the pre-equalized images (12) and
e) determines at least one finger characteristic using the three-dimensional model (20).

19. Arrangement as claimed in claim 18, **characterized in that**, said control unit first records checking images by means of at least two of said image receivers (Sᵢ) and monitors a placing of the finger (1) using said checking images and performs the remaining worksteps solely in case of a correct placing.

20. Arrangement as claimed in claim 18 or 19, **characterized in that**, next to each image receiver (Sᵢ), at least one light source (Lₖ) is arranged by means of which said surface to be imaged (1.1) is illuminatable at least partially, wherein each light source (Lₖ) is controllable independently of the other light sources (Lₖ).

21. Arrangement as claimed in claim 20, **characterized in that**, said light sources (Lₖ) are arranged and controllable in such a way that relevant boundary surfaces of dermal lines of the finger (1) reflect the light emitted by the light sources (Lₖ) directly to one of the light receivers (Sᵢ).

## Revendications

1. Procédé pour la saisie de données biométriques d'un doigt (1), avec les étapes suivantes :
- représentation sans contact d'une surface à représenter (1.1) du doigt (1) dans des images numériques (3) dans au moins trois directions différentes simultanément, chaque point de la surface à représenter (1.1) étant représenté dans au moins deux des directions, la surface à représenter (1.1) s'étendant d'un premier bord d'ongle (1.2) à un deuxième bord d'ongle (1.3) via la pulpe (1.4) du doigt (1) et la représentation étant effectuée au moyen d'au moins trois récepteurs d'image (Sᵢ) disposés sur un arc virtuel autour d'un axe du système et orientés vers l'axe du système,
- définition d'un modèle de base (14) à partir de paramètres géométriques déterminés d'un corps de base (G) géométrique donné et de silhouettes du doigt (1) dans des images à défauts corrigés (9) de trois capteurs (Sᵢ) différents,
- détermination d'images pré-égalisées (12) au moyen d'une pré-égalisation géométrique des images numériques (3) à partir du modèle de base (14), les images à défauts corrigés (9) étant projetées sur le modèle de base (14) et chaque point de comparaison étant rétroprojeté dans les images à défauts corrigés (9) correspondantes,
- reconstitution d'un modèle tridimensionnel (20) de la surface à représenter (1.1) au moyen d'une évaluation stéréoscopique des images pré-égalisées (12), et
- détermination d'au moins une caractéristique de doigt à partir du modèle tridimensionnel (20).

2. Procédé selon la revendication 1, **caractérisé en ce que** le modèle tridimensionnel (20) est reconstitué sur la base du modèle de base (14), une structure de lignes de la peau et/ou une texture superficielle de la surface à représenter (1.1) étant affectées au modèle tridimensionnel.

3. Procédé selon l'une des revendications précédentes, **caractérisé en ce que** des caméras (Sᵢ) sont utilisées pour la représentation, les défauts de représentation des caméras étant corrigés par calcul dans les images numériques (3).

4. Procédé selon l'une des revendications précédentes, **caractérisé en ce que** chaque image numérique (3) est filtrée dans une correction de nuance, un contraste local restant maintenu et les valeurs moyennes d'intensité des images numériques (3) étant normalisées.

5. Procédé selon l'une des revendications précédentes, **caractérisé en ce que** pour l'évaluation stéréoscopique, des axes parallèles bidimensionnels (16) sont déterminés à partir de combinaisons par paires des images pré-égalisées (12).

6. Procédé selon l'une des revendications précédentes, **caractérisé en ce qu'**au moins une partie d'un corps rotatif avec des rayons segmentairement variables le long de son axe de rotation est utilisée pour le modèle de base (14), ledit axe de rotation et les rayons étant définis à partir de contours du doigt (1) dans au moins deux images numériques (3) de directions de représentation différentes.

7. Procédé selon l'une des revendications précédentes, **caractérisé en ce que** des différences de hauteur (18) entre le modèle de base (14) du doigt (1) et le doigt (1) sont déterminées pour le modèle tridimensionnel (20), lesdites différences de hauteur (18) étant normales à une surface locale du modèle de base (14).

8. Procédé selon la revendication 7, **caractérisé en ce que**, pour le modèle tridimensionnel (20), une image à défauts corrigés à degrés de gris, en couleur ou multispectrale (9) de la surface à représenter est projetée sur le modèle de base (14) corrigé avec les différences de hauteur (18).

9. Procédé selon la revendication 8, **caractérisé en ce qu'**avant la projection sur le modèle de base (14), un choix optimisé est individuellement effectué pour une extraction de minuties parmi les images à défauts corrigés (9) pour chaque point d'image du modèle, la sélection des images à défauts corrigés (9) étant déterminée sur la base d'une normale à la surface d'un point correspondant de la surface à représenter (1.1), d'orientations intérieures et extérieures de récepteurs d'image (Sᵢ) et sur la base de positions, directions de faisceaux et cônes de faisceaux de sources lumineuses (Lₖ), ou sur la base d'analyses de texture des images à défauts corrigés (9).

10. Procédé selon la revendication 9, **caractérisé en ce qu'**avant la sélection, des sources lumineuses (Lₖ) éclairant un pixel de surface sont pondérées en fonction de l'angle d'un faisceau d'éclairage par rapport à la normale à la surface, un poids élevé étant affecté à des images à défauts corrigés (9) avec lumière incidente réfléchie sur ledit pixel de surface et/ou des images à défauts corrigés (9) dont la direction d'éclairage et de vision sont proches de la normale à la surface.

11. Procédé selon l'une des revendications 8 à 10, **caractérisé en ce que** des résultats de plusieurs projections d'images à défauts corrigés (9) sur le modèle tridimensionnel (20) sont combinés sous forme pondérée pour chaque point de surface ou une sélection de points de surface.

12. Procédé selon l'une des revendications 1 à 11, **caractérisé en ce qu'**une empreinte digitale déroulée virtuelle correspondant au modèle tridimensionnel (20) est générée en tant que caractéristique digitale.

13. Procédé selon la revendication 12, **caractérisé en ce que**, pour générer l'empreinte digitale déroulée virtuelle, le modèle tridimensionnel (20) est converti en une surface plane, par projection orthogonale du modèle tridimensionnel (20) sur un corps profilé et par affectation de points d'une surface du corps profilé à des points de la surface plane.

14. Procédé selon l'une des revendications 1 à 11, **caractérisé en ce qu'**une empreinte digitale déroulée virtuelle correspondant au modèle tridimensionnel (20) est générée, et des minuties classées à deux dimensions en tant que caractéristiques digitales sont extraites de l'empreinte digitale déroulée virtuelle par le procédé de correspondance d'empreintes digitales sur la base de minuties, les minuties classées à deux dimensions étant décrites par des attributs relatifs à leur emplacement d'extraction dans l'empreinte digitale, leur angle d'orientation, leur type et leur valeur indicative.

15. Procédé selon l'une des revendications 1 à 11, **caractérisé en ce qu'**une texture tridimensionnelle (30) est générée comme caractéristique digitale à partir du modèle tridimensionnel (20).

16. Procédé selon l'une des revendications 1 à 11, **caractérisé en ce que** des minuties classées à trois dimensions sont déterminées comme caractéristiques digitales à partir du modèle tridimensionnel (20).

17. Procédé selon l'une des revendications précédentes, **caractérisé en ce que** la surface à représenter (1.1) est éclairée lors de plusieurs phases de représentation par des sources lumineuses (Lₖ) différentes ou par des combinaisons de celles-ci.

18. Dispositif pour la saisie de données biométriques d'un doigt (1), comportant :
- au moins trois récepteurs d'image (Sᵢ) disposés sur un arc virtuel autour d'un axe du système et orientés vers l'axe du système, une surface à représenter (1.1) d'un doigt (1) positionné dans l'axe du système pouvant être représentée sans contact dans des images numériques (3) dans un nombre correspondant de directions différentes au moyen des récepteurs d'image (Sᵢ), chaque point de la surface à représenter (1.1) pouvant être représenté dans au moins deux desdites directions, et la surface à représenter (1.1) s'étendant d'un premier bord d'ongle (1.2) à un deuxième bord d'ongle (1.3) via la pulpe (1.4) du doigt (1), et
- une unité de commande, laquelle procède en plusieurs étapes de travail à :
a) un déclenchement simultanément des récepteurs d'image (Sᵢ) pour l'enregistrement des images numériques (3),
b) la définition d'un modèle de base (14) à partir de paramètres géométriques déterminés d'un corps de base (G) géométrique donné et de silhouettes du doigt (1) dans des images à défauts corrigés (9) de trois capteurs (Sᵢ) différents,
c) la détermination d'images pré-égalisées (12) au moyen d'une pré-égalisation géométrique des images numériques (3) à partir du modèle de base (14) par projection des images à défauts corrigés (9) sur le modèle de base (14) et par rétro-projection de chaque point de comparaison dans les images à défauts corrigés (9) correspondantes,
d) la reconstitution d'un modèle tridimensionnel (20) de la surface à représenter (1.1) au moyen d'une évaluation stéréoscopique des images pré-égalisées (12), et
e) à la détermination d'au moins une caractéristique de doigt à partir du modèle tridimensionnel (20).

19. Dispositif selon la revendication 18, **caractérisé en ce que** l'unité de commande enregistre d'abord des images de contrôle au moyen d'au moins deux des récepteurs d'image (Sᵢ) et surveille un positionnement du doigt (1) sur la base des images de contrôle, avant d'exécuter les autres étapes de travail en cas de positionnement correct.

20. Dispositif selon la revendication 18 ou la revendication 19, **caractérisé en ce qu'**au moins une source lumineuse (Lₖ) est disposée à côté de chaque récepteur d'image (Sᵢ), au moyen de laquelle la surface à représenter (1.1) peut être au moins partiellement éclairée, chaque source lumineuse (Lₖ) pouvant être commandée indépendamment des autres sources lumineuses (Lₖ).

21. Dispositif selon la revendication 20, **caractérisé en ce que** les sources lumineuses (Lₖ) sont disposées et peuvent être commandées de telle manière que des surface limitrophes déterminantes de lignes principales du doigt (1) réfléchissent directement vers un des récepteurs d'image (Sᵢ) la lumière diffusée par les sources lumineuses (Lₖ).
